# EUROPÄISCHE PATENTANMELDUNG

(11) **EP 3 088 622 A1**
(43) Veröffentlichungstag der Anmeldung: **02.11.2016**
(21) Anmeldenummer: 15165974.5
(22) Anmeldetag: 30.04.2015
(51) Int. Cl.: E04B 1/76, F16B 13/12

(54) **BEFESTIGUNGSELEMENT ZUM BEFESTIGEN EINES VERKLEIDUNGSELEMENTS AN EINER GEBÄUDEWAND**

(71) Anmelder: HILTI Aktiengesellschaft, 9494 Schaan (LI)
(72) Erfinder: Rosenkranz, Falk, 9658 Wildhaus (CH); Brunhuber, Thomas, 6811 Göfis (AT); Boeckle, Juergen, 9494 Schaan (LI); Rump, Stefan, 86916 Kaufering (DE)
(74) Vertreter: Hilti Aktiengesellschaft Corporate Intellectual Property

(57) **Zusammenfassung**

Die Erfindung betrifft ein ein Befestigungselement zum Befestigen eines Verkleidungselements an einer Gebäudewand, mit einem Dübel (10), der in ein Bohrloch in der Gebäudewand einführbar ist, einem am Dübel (10) angeordneten Halteteller (30) zum Halten des Verkleidungselements am Befestigungselement, und einem Haltebolzen (40), welcher zum Aufspreizen des Dübels (10) und Fixieren des Dübels (10) im Bohrloch in den Dübel (10) einführbar ist. Erfindungsgemäss ist vorgesehen, dass der Halteteller (30) und/oder der Haltebolzen (40) als brandgeschütztes Element ausgebildet ist, welches zumindest bereichsweise ein Brandschutzmaterial aufweist und/oder damit ummantelt ist, wobei das Brandschutzmaterial ein ablatives Material, ein intumeszierendes Material und/oder ein thermisch isolierendes Material ist.

## Beschreibung

Die Erfindung betrifft ein Befestigungselement zum Befestigen eines Verkleidungselements an einer Gebäudewand gemäss dem Oberbegriff des Anspruchs 1. Ein solches Befestigungselement ist ausgestattet mit einem Dübel, der in ein Bohrloch in der Gebäudewand einführbar ist, einem am Dübel angeordneten Halteteller zum Halten des Verkleidungselements am Befestigungselement, und einem Haltebolzen, welcher, zum Aufspreizen des Dübels und Fixieren des Dübels im Bohrloch, in den Dübel einführbar ist.

Beim Anbringen von Wärmedämmverbundsystemen an Gebäudeaussenwänden werden häufig Vorkehrungen getroffen, die im Falle eines Aussen- oder Zimmerbrandes einem Flammübergriff auf die gesamte Fassade entgegenwirken. Insbesondere können aus unbrennbarer Mineralwolle bestehende Aussenverkleidungen am Fenstersturz angebracht werden, oder es können rundumlaufende Mineralwolleverkleidungen vorgesehen werden, beispielsweise alle zwei Stockwerke, welche eine brandtechnische Unterteilung der Aussenfassade in einzelne Brandabschnitte bewirken.

Die Elemente aus Mineralwolle können mittels Verklebung am Gebäude fixiert werden. Zusätzlich oder alternativ können die Elemente aus Mineralwolle auch durch WDVSBefestigungselemente fixiert werden. Solche WDVS-Befestigungselemente weisen einen Dübel auf, mittels dem sie an der Gebäudewand fixiert werden. Zur Aussenseite schliesst ein grossformatiger Teller das Befestigungselement ab. Dieser Halteteller presst die Mineralwolle an die massive Aussenwand. Der Halteteller stellt den Anpressdruck der Mineralwolle zur Verfügung und gewährleistet damit den Halt der Mineralwolle an der Aussenfassade und somit den Funktionserhalt des Brandschutzes.

Aufgabe der Erfindung ist es, ein Befestigungselement anzugeben, welches bei geringem Herstellungsaufwand für die Montage von Bandschutz-Verkleidungselementen aus Mineral-wolle besonders gut geeignet ist.

Die Aufgabe wird erfindungsgemäss durch ein Befestigungselement mit den Merkmalen des Anspruchs 1 gelöst. Bevorzugte Ausführungsformen sind in den abhängigen Ansprüchen angegeben.

Ein erfindungsgemässes Befestigungselement ist dadurch gekennzeichnet, dass der Halteteller und/oder der Haltebolzen als brandgeschütztes Element ausgebildet ist, welches zumindest bereichsweise ein Brandschutzmaterial aufweist und/oder damit ummantelt ist, wobei das Brandschutzmaterial ein ablatives Material, ein intumeszierendes Material und/oder ein thermisch isolierendes Material ist.

Die Erfindung hat erkannt, dass der Halteteller und der Haltebolzen eines Befestigungselements einerseits eine besonders wichtige Haltefunktion für das Gesamtsystem haben, dass sie andererseits der bei einem Feuer auftretenden Flamm- und/oder Hitzeeinwirkung in besonders grossem Masse ausgesetzt sein können, insbesondere durch direkte Einwirkung, aber auch durch indirekte Einwirkung, wie beispielsweise im Zusammenhang mit einem Wärmeeintrag in den Teller durch Wärmeeinleitung über einen metallisch ausgeführten Haltebolzen. Hier setzt die Erfindung an und sieht vor, diese besonders prominenten Elemente gezielt gegen Feuereinwirkung zu schützen. Hierzu ist zumindest eines der beiden Elemente als brandgeschütztes Element ausgebildet. Ein solches brandgeschütztes Element zeichnet sich dadurch aus, dass es zumindest bereichsweise ein Brandschutzmaterial aufweist und/oder damit ummantelt ist. Das Brandschutzmaterial ist hierbei ein ablatives Material, ein intumeszierendes Material und/oder ein thermisch isolierendes Material.

Insbesondere kann erfindungsgemäss ein Schutz des Haltesystems vor einer Wärmeeinleitung über einen zentralen metallischen Haltebolzen in den Halteuntergrund realisiert werden. Auch wenn der zentrale Haltebolzen aus Kunststoff besteht, kann die Erfindung vor verfrühtem Wärmeeintrag in den Kern schützen. Der Halteteller sollte im Brandfall möglichst lange seine Form und Festigkeit erhalten. Wenn er dann doch verbrennt, sollte der Brandfortschritt gehemmt werden. Günstig ist auch, wenn ein möglichst grosser, thermisch gut isolierender Ascherest am Ursprungsort verbleibt. Dieser Ascherest schützt den darunterliegenden zentralen Kern vor Wärme und Feuereintrag, aber er verhindert auch bei entsprechender Festigkeit ein Abrutschen der Mineralwolle-Verkleidungselemente vom Haltebolzen.

Vorzugsweise weist das Befestigungselement, insbesondere zumindest der Halteteller und/oder der Haltebolzen, ein Kunststoffmaterial auf, was im Hinblick auf den Kosten- und Herstellungsaufwand vorteilhaft ist. Durch die erfindungsgemässe Ausgestaltung mit brandgeschützten Elementen kann ein solches Kunststoff-Befestigungselement wesentlich länger einem Feuer widerstehen als dies bestimmte konventionelle WDVS-Dübel können.

Sofern das brandgeschützte Element mit dem Brandschutzmaterial ummantelt ist, kann dies beinhalten, dass das Brandschutzmaterial einen Anstrich des brandgeschützten Elements bildet, der vorzugsweise stoffschlüssig mit dem brandgeschützten Element in Verbindung steht. Es kann aber auch beinhalten, dass das Brandschutzmaterial das brandgeschützte Element in Form eines, vorzugsweise elastischen, Überziehers umgibt.

Sofern das brandgeschützte Element zumindest bereichsweise ein Brandschutzmaterial aufweist, kann dies insbesondere beinhalten, dass das Brandschutzmaterial bei der Herstellung des brandgeschützten Elements dem Basismaterial des brandgeschützten Elements, welches insbesondere ein Kunststoffmaterial sein kann, beigemischt wird. Das Brandschutzmaterial kann im gesamten Volumen des brandgeschützten Elements oder aber nur an ausgewählten Stellen des brandgeschützten Elements vorgesehen sein.

Unter einem ablativem Material kann in fachüblicher Weise insbesondere ein wasserabspaltendes, kohlendioxid- oder stickstofffreisetzendes Material verstanden werden, das sich insbesondere durch eine endotherme Zerfallsreaktion auszeichnet. Insbesondere können Salze, melaminhaltige Stoffe oder anorganische Füllstoffe vorgesehen werden.

Unter einem intumeszierenden Material kann in fachüblicher Weise insbesondere ein Material verstanden werden, welches sein Volumen bei Hitzeeintrag vergrössert. Insbesondere können wasserhaltige Glimmermineralien (Schichtmineralien) wie Perlit, Vermicullit, verschiedene Tonarten (Illite, Montmorilonite, Kaolinite) oder modifizierte Graphite zum Einsatz kommen.

Das thermisch isolierende Material kann beispielsweise ein poröser anorganischer oder organischer Leichtzuschlagsstoff, ein anorganisches oder organisches Faserprodukt, ein geschäumtes Material und/oder ein bei erhöhten Temperaturen (50°C < T < 300°C) Gase freisetzendes Material sein.

Besonders bevorzugt ist es, dass das brandgeschützte Element ein phosphorhaltiges, stickstoffhaltiges, halogenhaltiges und/oder antimonhaltiges, organisches oder anorganisches, Additiv aufweist. Hierdurch kann der Abbrand des brandgeschützten Elements, das heisst des Haltetellers beziehungsweise des Haltebolzens, weiter verzögert und/oder verringert werden.

Weiterhin ist es besonders vorteilhaft, dass das brandgeschützte Element ein verglasendes anorganisches oder organisches Additiv, wie beispielsweise einen zinkhaltigen Stoff, ein Borat, eine Alkaliverbindung und/oder eine Erdalkaliverbindung aufweist. Hierdurch, aber auch durch eine gezielte Umwandlung der brennenden Matrix in eine hochfeuerfeste Koksstruktur, kann eine Verstärkung der verbleibenden Aschekruste des brandgeschützten Elements, das heisst des Haltetellers beziehungsweise des Haltebolzens, erzielt werden. Die Koksstruktur besteht vorzugsweise nach dem Brand aus fast reinem Kohlenstoff (> 80 mass.%), mit Resten von anorganischen oder organischen Alkali- und Erdalkalizuschlägen.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:

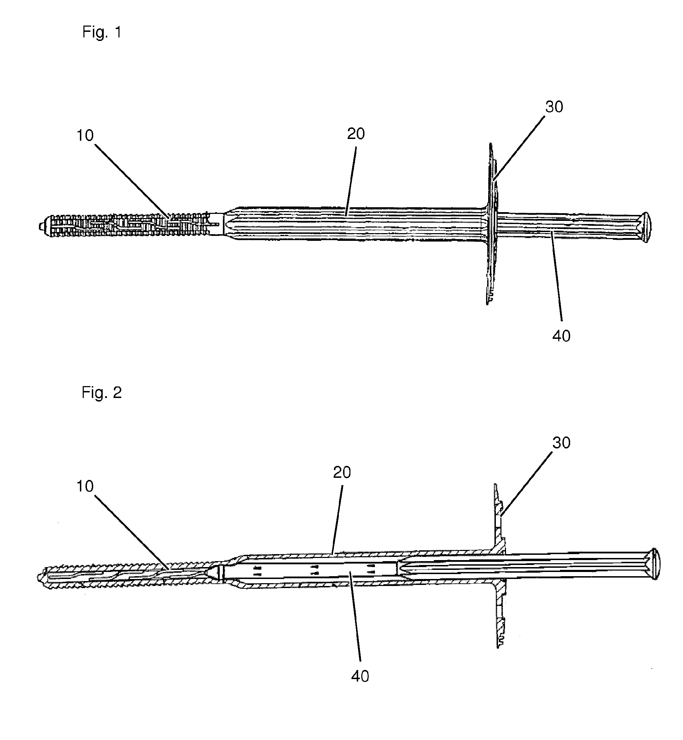

Figur 1: eine Seitenansicht eines erfindungsgemässen Befestigungselements; und
Figur 2: das Befestigungselement aus Figur 1 in teilweise geschnittener Seitenansicht.

Die Figuren zeigen ein Ausführungsbeispiel eines erfindungsgemässen Befestigungselements. Das Befestigungselement weist in seinem vorderen Endbereich einen Dübel 10 und in seinem rückwärtigen Endbereich einen Halteteller 30 auf. Dübel 10 und Halteteller 30 sind über einen hohlen Schaft 20 miteinander verbunden. Das Befestigungselement weist ferner einen Haltebolzen 40 auf. Dieser Haltebolzen 40 ist durch eine Ausnehmung im Halteteller 30 und durch den hohlen Schaft 20 hindurch so in den Dübel 10 einschiebbar, das der Dübel 10 radial aufspreizen und hierbei das Befestigungselement in einem Loch in einer nicht dargestellten Gebäudewand fixieren kann.

Der Haltebolzen 40 und/oder der Halteteller 30 sind als brandgeschütztes Element ausgebildet. Als solches weisen sie zumindest bereichsweise ein Brandschutzmaterial auf und/oder sind damit ummantelt, wobei das Brandschutzmaterial ein ablatives Material, ein intumeszierendes Material und/oder ein thermisch isolierendes Material ist.

Zum Setzen des Befestigungselements wird das Befestigungselement mit dem vorderseitigen Dübel 10 voran durch ein Verkleidungselement, insbesondere durch einen Brandriegel aus Mineralwolle, hindurch in ein in der Gebäudeaussenwand vorgesehenes Loch eingeführt. Hierbei kommt der Halteteller 30 in Kontakt mit dem Verkleidungselement. Sodann wird der Haltebolzen 40 durch den Halteteller 30 und den Schaft 20 hindurch in den Dübel 10 eingeschoben und der Dübel 10 hierdurch im Bohrloch fixiert. Damit ist das Verkleidungselement über den Halteteller 30 und den Dübel 10 an der Gebäudeaussenwand fixiert. Im unerwarteten Brandfall sorgt die erfindungsgemässe Ausführung des Haltebolzens 40 und/oder des Haltetellers 30 als brandgeschütztes Element dafür, dass diese Fixierung besonders wirksam erhalten bleibt.

## Patentansprüche

1. Befestigungselement zum Befestigen eines Verkleidungselements an einer Gebäudewand, mit
einem Dübel (10), der in ein Bohrloch in der Gebäudewand einführbar ist,
einem am Dübel (10) angeordneten Halteteller (30) zum Halten des Verkleidungselements am Befestigungselement, und
einem Haltebolzen (40), welcher, zum Aufspreizen des Dübels (10) und Fixieren des Dübels (10) im Bohrloch, in den Dübel (10) einführbar ist,
**dadurch gekennzeichnet,**
**dass** der Halteteller (30) und/oder der Haltebolzen (40) als brandgeschütztes Element ausgebildet ist, welches zumindest bereichsweise ein Brandschutzmaterial aufweist und/oder damit ummantelt ist, wobei das Brandschutzmaterial ein ablatives Material, ein intumeszierendes Material und/oder ein thermisch isolierendes Material ist.

2. Befestigungselement nach Anspruch 1,
**dadurch gekennzeichnet,**
**dass** der Halteteller (30) und/oder der Haltebolzen (40) ein Kunststoffmaterial aufweist.

3. Befestigungselement nach einem der vorstehenden Ansprüche,
**dadurch gekennzeichnet,**
**dass** das Brandschutzmaterial einen Anstrich des brandgeschützten Elements bildet oder dass das Brandschutzmaterial das brandgeschützte Element in Form eines, vorzugsweise elastischen, Überziehers umgibt.

4. Befestigungselement nach einem der vorstehenden Ansprüche,
**dadurch gekennzeichnet,**
**dass** das brandgeschützte Element ein phosphorhaltiges, stickstoffhaltiges, halogenhaltiges und/oder antimonhaltiges Additiv aufweist.

5. Befestigungselement nach einem der vorstehenden Ansprüche,
**dadurch gekennzeichnet,**
**dass** das brandgeschützte Element ein verglasendes Additiv aufweist.
